# EUROPEAN PATENT APPLICATION

(11) **EP 1 040 903 A2**
(43) Date of publication of application: **04.10.2000**
(21) Application number: 00105517.7
(22) Date of filing: 15.03.2000
(51) Int. Cl.: B29C 47/22, B29C 47/44, B29C 47/56, B29C 49/04

(54) **Machine for the production of hollow bodies made of different materials and related method**

(30) Priority: 30.03.1999 IT MI990659
(71) Applicant: UNILOY SRL - S.U., 50041 Calenzano (Firenze) (IT)
(72) Inventor: Bertolotti, Luca, 20080 Ozzero, Milano (IT); Minola, Mauro, 27029 Vigevano, Pavia (IT); Macchetta, Andrea, 20136 Milano (IT)
(74) Representative: Petruzziello, Aldo

(57) **Abstract**

A machine for the production of hollow bodies made of different materials, comprising:
a feeding unit (2), through which plastic material in the solid state is introduced;
a plastication unit comprising at least two rotating plastication screws (4), to transform the plastic material from the solid to the semisolid state, and at least two accumulation chambers (11) for the plasticated material in the semisolid state;
at least one extrusion head (5), through which the plastic material in the semisolid state coming from the accumulation chambers (11) is coextruded to form hollow bodies or parisons;
the plastication screws (4) being movable in the axial direction, so as to push the plastic material from the accumulation chambers (11) into the extrusion head (5).

## Description

The invention, in general terms, refers to a machine and a method for the production of hollow bodies made of different materials. In particular it refers to a machine and a method for intermittent coextrusion.

Plastic material in the solid state, generally in pellets, is introduced into an extruder, wherein it is plasticated by a plastication screw. The plasticated material in the semisolid state flows through an extrusion head, in which it assumes a tubular form commonly called parison. The parison is closed within a mould, mounted on the platens of a press. Inside the mould the prison in the semisolid state is blown with compressed air so as to come in contact with the mould walls and take the form of the mould. The produced article is finally cooled, taken out of the mould and finished before being marketed.

Prisons can be used for producing different kinds of containers: for example small containers, like bottles for optical or medical liquids, or big containers for industrial packaging up to 1000 l capacity, or containers for high-consumption products, like bottles for drinks or personal-care products, or they can be used for producing technical articles, for example articles used in the automotive field.

In general two different extrusion methods are considered: continuous extrusion and intermittent extrusion with accumulator head.

In continuous extrusion the prison is extruded continuously through the extrusion head. This process is simple and cheap and particularly suited for producing articles with volume from 0.1 up to 10 l made of thermosensitive high melt-strength materials.

The process is unsuitable for large parisons made of materials of low melt-strength which could deform or tear by reason of their own weight. To solve these problems an intermittent extrusion process with accumulator head is employed, in which the plasticated material is accumulated in an accumulation chamber within the extrusion head. When the required amount of plastic material has been accumulated, it is expelled in a short time from the accumulation chamber by means of a hydraulic plunger. In this way it is possible to process higher amounts of material as well as low melt-strength materials. The intermittent extrusion machine with accumulator head is complex and expensive.

In several cases it is useful to employ for a same article different materials (meaning also materials of the same chemical nature but with different additivation, for example a virgin material and the same material coloured), so as to exploit their peculiar characteristics in localised places on the article. In this case the coextrusion process is employed. One speaks of radial coextrusion if the materials are layered in the direction of the article thickness, and sequential coextrusion if the materials are alternated along the longitudinal axis.

Radial coextrusion is in general a continuous process, and maintains the drawbacks described above with low-melt-strength materials or heavy articles. Sequential coextrusion, on the contrary, cannot be performed with a continuous machine, since delays of extruders' start-ups and shut-downs would cause transition zones between the materials to be excessively long in comparison with the usual parison length. On the other hand, accumulator heads for radial coextrusion are very expensive and complicated, and suited only for very large articles, whereas an accumulator head for sequential coextrusion would imply big designing and realising efforts.

In general, in these cases one resorts to an intermittent system with preaccumulators, as described for example in patent DE 4423381, which is the closest prior art. With reference to Fig. 4 and patent DE 4423381, two different plastic materials, A and B, are introduced into two separate extruders 104 and 105, in which they are plasticated by means of their respective plastication screws which turn around their own axis. The plasticated materials A and B are accumulated in two separate preaccumulation chambers 102 and 103, respectively. The plasticated materials A and B accumulated in the chambers 102 and 103 are expelled by the respective hydraulic plungers 108 and 109 and injected in a normal coextrusion bead 101. Making use of an opportune control system it is possible in principle to set any kind of sequence, by extruding the materials both one after the other and at the same time. Finally, the material coextruded from the coextrusion head 101 is taken within a mould 110 in order to form the desired preform.

The solution described, however, shows several drawbacks:
- Preaccumulation chambers 102 and 103 are cumbersome and expensive, so that the machine bulk and cost are excessive relative to the dimensions of the article to be produced.
- Preaccumulation chambers 102 and 103 represent a stagnation zone for the material; therefore, during change of material type or colour, when it is necessary a thorough cleaning of the preaccumulation chambers, high time and material waste are unavoidable.
- Material accumulation and expulsion are not completely separated, since extruders move continuously, and this causes difficulties in managing material expulsion sequences precisely, especially when very short transition zones between the materials are required.

An aim of the invention is to eliminate the drawbacks mentioned above by providing a machine for the production of hollow bodies made of different materials which is of small dimensions, cheap, versatile and easy to be built.

Another aim of the invention is to provide a method for the production of hollow bodies made of different materials which is effective, simple, fast and cheap.

These aims are achieved according to the invention, with the machine and method characteristics listed in the appended independent claims 1 and 7, respectively. Preferred embodiments of the invention will be apparent from the dependent claims.

According to the invention, the machine for the production of hollow bodies made of different materials comprises a single component with the function of an injection unit. This injection unit performs alternatively the functions of plastication and accumulation of plasticated material and the function of expulsion of the accumulated plasticated material into a coextrusion head.

Inside the injection unit, during the phase of plastic material accumulation, a plastication screw moves backward while turning around its own axis, so as to create an accumulation chamber which is filled up with the plasticated material. When the needed quantity of material has been accumulated in the accumulation chamber, the plastication screw stops turning and moving backward, and then moves forward, pushing the plasticated material into the extrusion head. In other words, the plastication screw acts like a reciprocating screw performing the function of the plungers of the preaccumulation chambers in the prior art machine and therefore the plastication unit acts like an injection unit.

By means of an opportune control system it is possible to set any sequence of movements of the reciprocating screw. Therefore, by using one of these units for every material to be co-extruded, it is possible to obtain any material distribution in the article. Moreover, the possibility to impose a holding pressure avoids material back-flow during the extrusion of the other materials.

Thanks to the elimination of preaccumulation chambers and related plungers, the machine according to the invention shows several advantages with respect to the machines of the prior art. In comparison with the solution with the separated preaccumulation chambers, the machine according to the invention is simpler and smaller and also cheaper, because there are less components.

Moreover, if the injection unit and the coextrusion head are well designed from a fluidodynamic point of view, during production and material change the time needed for cleaning the machine of old material traces are significantly less than those required by the machines of the prior art.

In addition to the advantages mentioned above, the machine according to the invention is very versatile and suited for different production types. For pure reasons of clarity some application examples are given in the following.

In a car ventilation duct the extremities of the duct need to possess a certain stiffness for the fixing of joints, while the central zone of the duct needs to be flexible and deformable. The machine of the invention, by sequential coextrusion, can realise the central part of the duct with a softer material than that used for the extremities, with a transition zone between the two materials of a few centimetres length.

For the same application, that is a car ventilation duct, it is necessary that the internal surface of the duct be very smooth, in order to avoid turbolence of the air flowing inside, and this smoothness can be obtained only with a stiff material. The machine of the invention can realise a duct in radial coextrusion with the internal surface of a stiffer material than that of the external one.

Further characteristics of the invention will be made clearer by the following detailed description, referring to a purely exemplary and non-limiting embodiment thereof, illustrated in the appended drawings in which:
Fig. 1 is a side elevational view of the machine of the invention;
Fig. 2 is a top view of the machine of Fig. 1;
Fig. 3 is a diagrammatic axonometric view of the feeding, plastication, and extrusion assembly of the machine of Fig. 1, in which one injection unit is shown open to show the plastication screw and the accumulation chambers.
Fig. 4 is a diagrammatic view of the principle of a machine according to the prior art.

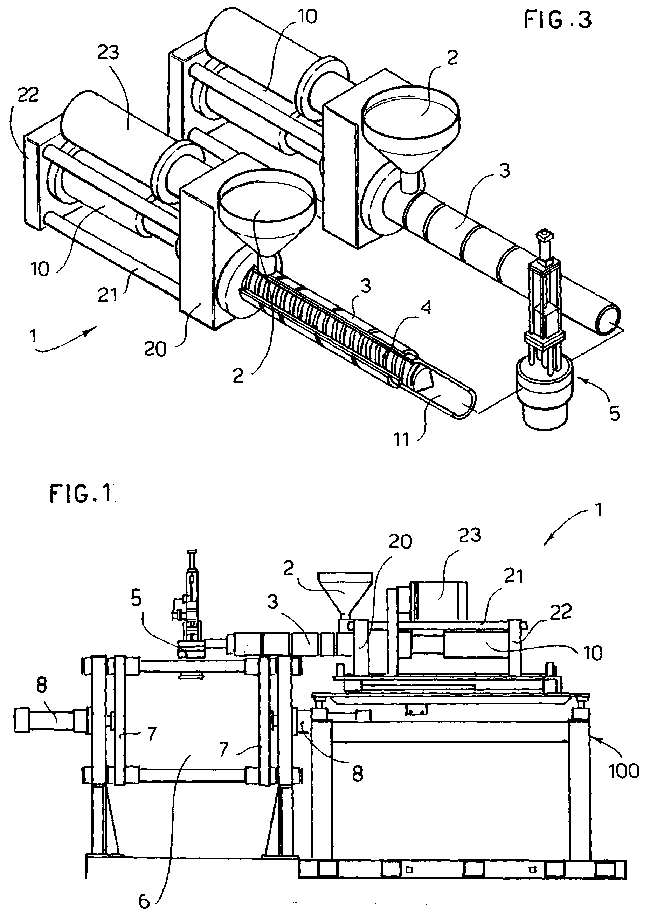

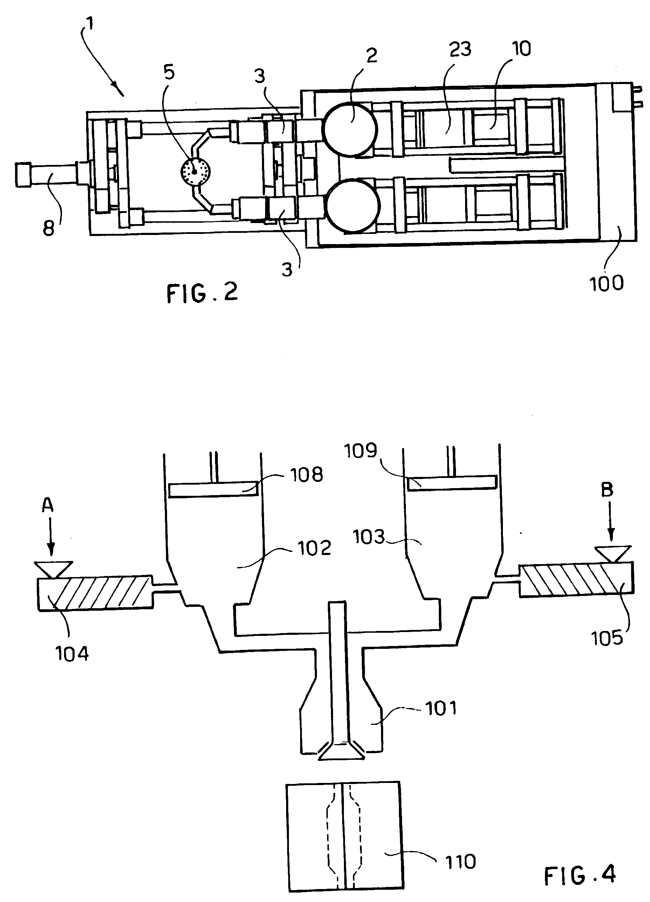

Thanks to Figs. 1-3 a machine for the production of hollow bodies made of different materials, according to the invention, is described. This machine, indicated in the whole with number 1, comprises a feeding unit, a plastication unit, an extrusion unit and a blowing unit.

The feeding unit comprises two hoppers 2 in form of a funnel open on the top for the introduction of the plastic material, in general in solid pellets. The hoppers 2 load the material into two injection units 3, respectively. Each injection unit 3 is in practice made of a hollow barrel and connected to a frame 20 fixed to the structure 100 of the machine and connected to a platen 22 by rods 21. Injection units 3 are the plastication unit.

As it is shown in Fig 3, within the injection units 3 respective plastication screws 4 are rotatably mounted. Each plastication screw 4 can turn around its own axis by means of a motor 23. Rotation of screws 4 allows the plastication of the plastic material which transforms from the solid to the semisolid state. Plastication screws 4 can move in the axial direction and are operated by two hydraulic actuators 10 connected to the hydraulic plant of the machine. Each actuator 10 comprises a cylinder fixed to the respective platen 22 of the machine and a piston connected at the respective plastication screw 4. This way, plastication screws 4 act as plungers for pushing the plastic material into the extrusion unit.

During the loading, that is when the plastic material in pellets is introduced into the hoppers 2, each plastication screw 4 moves backward, while turning around its own axis, so as to create a chamber 11, shown in Fig. 3, which is filled up by plasticated material and acts as accumulation chamber. When the needed amount of material has been accumulated in the chamber 11, the screw 4 stops turning and moving backward and then moves forward, pushing the plasticated material into the extrusion unit.

The extrusion unit is made of a single coextrusion head 5 suitable for sequential extrusion. The plastic material extruded out of the coextrusion head 5 takes the form of a hollow body, called parison, which is extruded within the blow-moulding unit.

The blow-moulding unit, as per se known, comprises a press 6 on which two mobile half-moulds 7 are mounted, moved by respective cylinders 8. The parison is closed inside the two half-moulds 7 and compressed air is blown into, so that the parison expands and takes the form of the walls of the mould. Subsequently, the blown article is cooled, extracted and finished.

An opportune control system acting on the actuators 10 is provided, so as to regulate the movement of extrusion screws 4. By means of this control system it is possible to set any move-and-stop sequence of screws 4. If two different plastic materials A and B are used in the two hoppers 2 it is possible to obtain any distribution of materials A and B in the parison expelled from the extrusion head 5, and consequently the same distribution of materials A and B also in the finished article.

In accumulation chambers 11, moreover, a holding pressure can be imposed, so as to avoid the back-flow of one accumulated material during extrusion of the other.

Though the description above refers to a machine with two plastication screws and respective accumulation chambers, it is evident that the invention is extended to machines with higher number of plastication screws.

## Claims

1. Machine for the production of hollow bodies made of different materials, comprising:
• a feeding unit (2), through which plastic material in a solid state is introduced;
• a plastication unit comprising at least two rotating plastication screws (4), to transform the plastic material from a solid state to a semisolid state, and at least two accumulation chambers (11) for the plasticated material in the semisolid state;
• at least one extrusion head (5) in which the plastic material in the semisolid state coming from said accumulation chambers (11) is coextruded to form hollow bodies or parisons;
• characterized in that said plastication screws (4) can move axially so as to push the plastic material from said accumulation chambers (11) to said extrusion head (5).

2. Machine according to claim 1, characterized in that said accumulation chambers (11) are obtained in the chambers of the respective plastication screws (4) and are filled up by means of a rotation and axial backward movement of said screws (4).

3. Machine according to claim 1 or 2, characterized in that said extrusion screws (4) are moved axially by means of respective hydraulic or pneumatic actuators (10).

4. Machine according to claim 3, characterized in that said actuators (10) comprise respective cylinders fixed to the machine structure and correspondent pistons connected to the plastication screws (4).

5. Machine according to claim 3 or 4, characterized in that said actuators (10) are guided by a control system which is able to program any material distribution in the hollow bodies.

6. Machine according to any of the previous claims, characterized in that said at least two of the accumulation chambers (11) are held with a holding pressure in order to avoid back-flow of the accumulated plastic material during extrusion.

7. Method for the production of hollow bodies made of different materials comprising the following steps:
• loading of the plastic material in the solid state in one feeding unit (2) of the machine;
• plastication of the plastic material by turning around their own axis of at least two plastication screws (4);
• accumulation of the plasticated material in the semisolid state in at least two accumulation chambers (11);
• injection of the plasticated material from at least two of the said accumulation chambers (11) into a coextrusion head (5) so as to create the hollow body or parison;
• characterized in that said injection of the plasticated material into the extrusion head is obtained by means of axial movement of said plastication screws (4).

8. Method according to claim 7, characterized in that during the plastication step, said plastication screws (4) move backward axially while turning around their own axis, so as to allow to fill up said accumulation chambers (11), obtained from the barrels of the screws (4).
